# EUROPÄISCHE PATENTSCHRIFT

(11) **EP 2 881 299 B1**
(45) Veröffentlichungstag und Bekanntmachung des Hinweises auf die Patenterteilung: **28.08.2019**
(21) Anmeldenummer: 14194501.4
(22) Anmeldetag: 24.11.2014
(51) Int. Cl.: B60W 50/14, B60R 16/023, B60W 10/10, B60W 30/18

(54) **Verfahren und Vorrichtung zum energieeffizienten Bertrieb eines Kraftfahrzeugs**
Method and device for energy-efficient operation of a motor vehicle
Procédé et dispositif de fonctionnement énergétiquement efficace d'un véhicule automobile

(30) Priorität: 09.12.2013 DE 102013225259
(43) Veröffentlichungstag der Anmeldung: 10.06.2015
(73) Patentinhaber: Volkswagen Aktiengesellschaft, 38440 Wolfsburg (DE)
(72) Erfinder: Pascheka, Patrick, 38106 Braunschweig (DE)

(56) Entgegenhaltungen:
- DE-A1-102008 061 392
- DE-A1-102009 031 085
- DE-A1-102013 202 934

## Beschreibung

Die Erfindung betrifft ein Verfahren zum energieeffizienten Betrieb eines Kraftfahrzeugs gemäß dem Oberbegriff des Anspruchs 1 sowie eine entsprechende Vorrichtung gemäß Anspruch 9.

Bekanntermaßen rollt auf einer hinreichend stark geneigten Gefällstrecke ein Fahrzeug von alleine los. Zur Überwindung der Reibungskräfte ist dazu ein Gefälle von etwa einem Prozent notwendig, damit sich ein Fahrzeug von alleine in Bewegung setzt. Bei stärkeren Gefällen wird das Fahrzeug bis auf eine Gleichgewichtsgeschwindigkeit beschleunigt, bei der sich die Hangabtriebskraft des Fahrzeugs und die Fahrwiderstände, insbesondere Roll- und Luftwiderstand, einander entsprechen.

Ferner führt ein Ausrollen des Fahrzeugs im Schubbetrieb, also mit geschlepptem Motor, zu höheren Fahrwiderständen. Ein Fahrzeug ist also im Schubbetrieb zusätzlichen Fahrwiderständen ausgesetzt, sodass die Gleichgewichtsgeschwindigkeit in einem Gefälle mit eingelegtem Gang, also im Schubbetrieb, unter der Gleichgewichtsgeschwindigkeit im ausgekuppelten Zustand bzw. in Neutralstellung, was auch als Freilauf bezeichnet wird, liegt.

Geschwindigkeitsregelsysteme gehören mittlerweile zur Standardausrüstung heutiger Kraftfahrzeuge, welche das Fahrzeug automatisch auf einer vorgegebenen Geschwindigkeit halten, indem sie Gas geben und teilweise auch bremsen. Ebenso sind automatisch betätigte Kupplungen zwischen Motor und Getriebe bekannt.

Um energieeffizienter fahren zu können, bietet sich die Nutzung einer Gefällstrecke an, indem der Antriebsstrang gegebenenfalls ausgekuppelt werden kann, damit das Gefälle zur Verminderung des Verbrauchs beitragen kann. Es muss jedoch bekannt sein, ob das Gefälle ausreichend ist, um mit geöffnetem Antriebsstrang eine vorgegebene Wunschgeschwindigkeit zu halten.

Hierzu sind bereits Systeme bekannt, die die Informationen über das Gefälle aus einer digitalen Straßenkarte nutzen, um den Antriebsstrang bei passender Geschwindigkeit-Gefälle-Kombination zu öffnen. Diese Systeme haben einerseits den Vorteil, dass sie vorausschauend agieren können, andererseits haben sie den Nachteil, dass a-priori-Informationen über das vorausliegende Gefälle, beispielsweise aus einer digitalen Straßenkarte, erforderlich sind. Sie sind daher auf die Kombination mit einem Navigationssystem bzw. einer Ortung und der Verfügbarkeit von ortsgebundenen Steigungsinformationen angewiesen.

Aus der Druckschrift DE 103 45 319 A1 ist eine vorausschauende Geschwindigkeitssteuerung für ein Kraftfahrzeug bekannt, welche Informationen über die gegenwärtige Fahrzeugposition sowie über das bevorstehende Gelände verwendet, um Kraftstoff zu sparen und den Fahrkomfort zu erhöhen. Dabei wird die Wunschgeschwindigkeit des Tempomaten durch ein Geschwindigkeitsband ersetzt, innerhalb dem sich das Fahrzeug bewegen soll. Im Idealfall verlangsamt das Fahrzeug, wenn es sich bergauf bewegt, bis es höchste Position erreicht hat, und nimmt auf dem Bergabwärtsstück wieder Geschwindigkeit auf, um die potentielle Energie wieder in kinetische Energie umzusetzen.

In der Druckschrift DE 10 2011 050 739 A1 ist eine Abstands- und Geschwindigkeitsregelung beschrieben, in welcher der jeweilige Fahrmodus einen möglichst geringen Kraftstoffverbrauch bei gleichzeitig möglichst hohem Fahrkomfort gewährleisten soll. Dabei kann das Fahrzeug zur Kraftstoffeinsparung auch in einem Freilaufmodus betrieben werden.

Die Druckschrift DE 10 2008 019 174 A1 beschreibt ein Verfahren zum Betreiben eines Fahrzeugs, bei welchem eine gegenwärtige Fahrzeugposition, Informationen über eines vorliegende Strecke und die Fahrzeuggeschwindigkeit ermittelt werden. Anhand der ermittelten Informationen wird die Fahrzeuggeschwindigkeit gesteuert. Dabei müssen die Informationen über die vorausliegende Strecke, insbesondere deren Topologie, in abgespeicherter Form vorhanden sein.

In Druckschrift DE 10 2007 030 490 A1 wird ein Verfahren zur Betätigung der Kupplung eines Antriebsstrangs beschrieben, wobei zum Ausrollen des Fahrzeugs in einer Ebene die Kupplung zur Kraftstoffersparnis geöffnet wird.

Die Druckschrift DE 10 2008 061 392 A1 bezieht sich auf ein Geschwindigkeitsregelsystem für Fahrzeuge zur verbrauchsorientierten Regelung der Fahrzeuggeschwindigkeit innerhalb eines vorgegebenen Sollgeschwindigkeitsbereichs, mit einer Bedieneinheit zum Aktivieren der verbrauchsorientierten Geschwindigkeitsregelung, und mit einer Steuereinheit, die bei aktivierter verbrauchsorientierter Geschwindigkeitsregelung die Fahrzeuggeschwindigkeit innerhalb des vorgegebenen Sollgeschwindigkeitsbereichs unter Berücksichtigung eines vorgegebenen maximalen Energieverbrauchswerts regelt. Dabei wird die Fahrzeuggeschwindigkeit derart geregelt, dass der vorgegebene maximale Energieverbrauchswert nur solange nicht überschritten wird, solange unter Berücksichtigung des vorgegebenen Energieverbrauchswerts eine Fahrzeuggeschwindigkeit einregelbar ist, die innerhalb des vorgegebenen Sollgeschwindigkeitsbereichs liegt.

Der Erfindung liegt daher die Aufgabe zugrunde ein System zum energieeffizienten Betrieb eines Kraftfahrzeugs mit einfacher Realisierbarkeit zu schaffen.

Diese Aufgabe wird durch ein Verfahren zum energieeffizienten Betrieb eines Kraftfahrzeugs mit den Merkmalen des Anspruchs 1 sowie durch eine entsprechende Vorrichtung mit den Merkmalen des Anspruchs 9 gelöst. Bevorzugte Ausführungsformen der Erfindung sind Gegenstand der abhängigen Ansprüche.

Bei dem erfindungsgemäßen Verfahren zum energieeffizienten Betrieb eines Kraftfahrzeugs, wird ein binäres Signal erzeugt, wenn der Kraftstoffverbrauch des Fahrzeugs bei einer aktuellen Geschwindigkeit kleiner oder gleich einem für diese Geschwindigkeit spezifischen Verbrauchswert ist. Auf diese Weise kann ohne eine Ortungslösung im Fahrzeug und ohne Verwendung von Kartendaten oder sonstiger externer Information einzig anhand des Vergleichs zwischen dem aktuellen Kraftstoffverbrauch und dem für die Geschwindigkeit spezifischen Verbrauch bestimmt werden, ob das aktuelle Gefälle ausreichend ist, um durch eine Öffnung des Antriebsstrangs ein energiesparendes Fahren zu erreichen.

Erfindungsgemäß ist der spezifische Verbrauchswert bei einer vorgegebenen Geschwindigkeit derjenige, den das Kraftfahrzeug bei geschlossenem Antriebsstrang zur Beibehaltung der Geschwindigkeit in einem Gefälle benötigt, bei welchem das Kraftfahrzeug bei geöffnetem Antriebsstrang die Geschwindigkeit konstant beibehalten würde. Mit anderen Worten, für eine vorgegebene Geschwindigkeit gibt es genau ein Gefälle, bei dem das Fahrzeug bei dieser Geschwindigkeit bei geöffnetem Antriebsstrang sich konstant bewegen würde. Wird bei diesem Gefälle der Antriebsstrang geschlossen, so muss der Antriebsstrang Vortrieb bereitstellen, um das Fahrzeug auf der Geschwindigkeit zu halten. Der dazu notwendige Kraftstoffverbrauch definiert den spezifischen Verbrauch für diese Geschwindigkeit.

Wenn das binäre Signal gesetzt ist, wird vorzugsweise der Antriebsstrang des Kraftfahrzeugs geöffnet. Dieses Verfahren kann bei Fahrzeugen mit einem automatischen Getriebe oder mit einer automatisierten Kupplung eingesetzt werden. Wenn der Fahrer ein Fahr- oder Bremspedal betätigt, kann der Antriebsstrang wieder geschlossen werden um eine Beschleunigung bzw. Bremswirkung des Motors zu ermöglichen.

Weiter bevorzugt bewirkt das Setzen des binären Signals eine Benachrichtigung des Fahrers zum Auskoppeln des Antriebsstrangs. Auf diese Weise ist es möglich auch bei Fahrzeugen mit manuellem Getriebe eine Reduktion des Verbrauchs zu erreichen, indem der Fahrer entsprechende Verhaltenshinweise, beispielsweise per Schaltpunktanzeige, erhält und aufgefordert wird den Antriebsstrang durch Schalten in die Neutralstellung zu öffnen. Sobald der Fahrer ein Fahr- oder Bremspedal betätigt, kann er durch Anzeige des einzulegenden Gangs wieder zum Schließen des Antriebsstrangs aufgefordert werden.

Vorzugsweise kann eine energieeffiziente und einfache realisierbare Geschwindigkeitsregelung realisiert werden, indem die Geschwindigkeit des Kraftfahrzeugs auf eine Regelgeschwindigkeit innerhalb eines vorgegebenen Geschwindigkeitsbandes geregelt wird.

Vorzugsweise wird dann der Antriebsstrang des Kraftfahrzeugs geöffnet, wenn das binäre Signal gesetzt ist, wobei mit dem Erreichen einer der beiden Grenzen des Geschwindigkeitsbandes der Antriebsstrang wieder geschlossen wird. Durch diese Maßnahme wird ein geschlossener Regelkreis geschaffen. Erreicht die aktuelle Geschwindigkeit das Fahrzeug die untere Grenze des Geschwindigkeitsbandes, so kann das Fahrzeug die Geschwindigkeit nicht einhalten und es muss wieder beschleunigen. Wird dagegen die obere Grenze des Geschwindigkeitsbandes erreicht, so beschleunigt das Fahrzeug mit offenem Antriebsstrang zu stark, so dass zum Abbremsen des Fahrzeugs der Antriebsstrang wieder geschlossen werden muss. Dieses Verfahren kann bei Fahrzeugen mit automatischem Getriebe oder mit einer automatisierten Kupplung eingesetzt werden. Weiter bevorzugt bewirkt das Setzen des binären Signals eine Benachrichtigung des Fahrers zum Auskoppeln des Antriebsstrangs und das Erreichen einer der beiden Grenzen des Geschwindigkeitsbandes löst eine weitere Nachricht zum Einkoppeln des Antriebsstrangs an den Fahrer aus. Auf diese Weise ist es möglich auch bei Fahrzeugen mit manuellem Getriebe eine Reduktion des Verbrauchs zu erreichen, indem der Fahrer entsprechende Verhaltenshinweise, beispielsweise per Schaltpunktanzeige, erhält und aufgefordert wird den Antriebsstrang durch Schalten in die Neutralstellung zu öffnen und durch Anzeige des einzulegenden Gangs wieder zu schließen, wodurch auch das Wissen des Fahrers über die Umfeldsituation mit einbezogen wird.

Vorzugsweise sind die spezifischen Verbrauchswerte für vorgegebene Geschwindigkeiten in einer Kennlinie abgelegt. Diese Kennlinie kann der Geschwindigkeitsregelung beispielsweise ohne Weiteres mittels einer Look-Up-Tabelle zur Verfügung gestellt werden, wodurch sich die technische Umsetzung des Verfahrens sehr einfach realisieren lässt.

Weiter bevorzugt lassen sich die spezifischen Verbrauchswerte per Simulation und/oder per Experiment vorab ermitteln, so dass fahrzeugspezifisch die zur Umsetzung des Verfahrens notwendige Kennlinie einfach bestimmt werden kann.

Die erfindungsgemäße Vorrichtung zum energieeffizienten Betrieb eines Kraftfahrzeugs, welche zur Durchführung des im Vorangegangenen erläuterten Verfahrens eingerichtet und ausgelegt ist, umfasst eine Steuereinrichtung, eine Einrichtung zur Bestimmung der aktuellen Geschwindigkeit, und eine Einrichtung zur Bestimmung des Kraftstoffverbrauchs, wobei
- die Steuereinrichtung den aktuellen Kraftstoffverbrauch bei einer aktuellen Fahrzeuggeschwindigkeit mit einem für diese Geschwindigkeit spezifischen Kraftstoffverbrauch vergleicht, und ein binäres Regelsignal erzeugt, wenn der aktuelle Kraftstoffverbrauch kleiner oder gleich dem spezifischen Kraftstoffverbrauch ist,
- das binäre Signal anzeigt, ob durch eine Öffnung des Antriebsstrangs ein energiesparendes Fahren möglich ist, und
- der spezifische Verbrauchswert bei einer vorgegebenen Geschwindigkeit derjenige ist, den das Kraftfahrzeug bei geschlossenem Antriebsstrang zur Beibehaltung der Geschwindigkeit in einem Gefälle benötigt, in welchem das Kraftfahrzeug bei geöffnetem Antriebsstrang die Geschwindigkeit konstant beibehalten würde.

Die Steuereinrichtung kann das Kraftfahrzeug auf eine Regelgeschwindigkeit innerhalb eines vorgegebenen Geschwindigkeitsbandes regeln und den aktuellen Kraftstoffverbrauch bei einer innerhalb des Geschwindigkeitsbandes liegenden aktuellen Geschwindigkeit mit einem für diese Geschwindigkeit spezifischen Kraftstoffverbrauch vergleichen. Somit ist eine einfache energieeffiziente Geschwindigkeitsregelvorrichtung realisierbar.

Weiter bevorzugt weist die Vorrichtung eine Ansteuereinheit auf, die ein Öffnen des Antriebsstrangs oder eine Nachricht an den Fahrer zum Öffnen des Antriebsstrangs aufgrund des binären Signals bewirkt. Die Ansteuereinheit kann daher bei Fahrzeugen mit einem automatischen Getriebe oder einer automatischen Kupplung zum automatischen Öffnen des Antriebsstrangs verwendet werden oder wird bei manuell schaltbaren Fahrzeugen zum Betrieb beispielsweise einer Schaltpunktanzeige verwendet, um den Fahrer zum Schalten in die Neutralstellung zu veranlassen.

Weiter bevorzugt setzt die Steuereinrichtung das binäre Regelsignal zurück, wenn bei gesetztem Regelsignal die aktuelle Geschwindigkeit des Fahrzeugs eine der beiden Grenzen des Geschwindigkeitsbandes erreicht hat. Auf diese Weise wird ein geschlossener Regelkreis erreicht und der Antriebsstrang bei Erreichen einer der beiden Grenzen des Geschwindigkeitsbandes wieder geschlossen, um entweder das Fahrzeug an der unteren Geschwindigkeitsgrenze wieder zu beschleunigen oder an der oberen Geschwindigkeitsgrenze abzubremsen.

Vorzugsweise bewirkt die Ansteuereinrichtung ein Schließen des Antriebsstrangs oder eine Nachricht an den Fahrer zum Schließen des Antriebsstrangs aufgrund des Rücksetzens des binären Signals.

Zusammenfassend kann anhand der Kennlinie des spezifischen Verbrauchs, die fahrzeug- und antriebsspezifisch vorab bestimmt werden kann, der Verbrauch des Fahrzeugs optimiert werden. Fährt das Fahrzeug und unterschreitet der Momentanverbrauch den zu der aktuellen Geschwindigkeit gehörenden spezifischen Kraftstoffverbrauch, so kann geschlossen werden, dass das Fahrzeug mit geöffnetem Antriebsstrang, d.h. im Freilauf, die aktuelle Geschwindigkeit halten würde.

Fährt das Fahrzeug geschwindigkeitsgeregelt so kann geschlossen werden, dass das Fahrzeug mit geöffnetem Antriebsstrang, d.h. im Freilauf, die aktuelle Geschwindigkeit, die die gewünschte Regelgeschwindigkeit darstellt, innerhalb des Geschwindigkeitsbandes halten würde. Es bedarf also keiner Kartendaten, um zu erkennen, dass ein vorhandenes Gefälle ausreicht, um das Fahrzeug im Freilauf bei der eingestellten Geschwindigkeit zu halten.

Ferner hat das beschriebene Verfahren den Vorteil, dass nicht nur Gefälle berücksichtigt werden. Befährt das Fahrzeug ein Gefälle mit einer nicht ausreichenden Steigung, um die Regelgeschwindigkeit zu halten, und erfährt das Fahrzeug Rückenwind, so kann der aktuelle Kraftstoffverbrauch wiederum unter den spezifischen Verbrauch sinken. Dann führt ebenfalls ein Ausrollen im Freilauf zum Halten der Regelgeschwindigkeit.

Im Extremfall ist es denkbar, dass selbst in einer Ebene der Rückenwind groß genug ist, das Fahrzeug im Freilauf bei einer vorgegebenen Regelgeschwindigkeit zu halten. In diesem Falle würde erkannt, dass der Momentanverbrauch unter den spezifischen Verbrauch sinkt. Dann kann das Fahrzeug im ausgekuppelten Zustand ebenfalls bei der gewünschten Regelgeschwindigkeit gehalten und der Verbrauch reduziert werden.

Eine bevorzugte Ausführungsform der Erfindung wird nachfolgend anhand der Zeichnungen dargestellt. Dabei zeigt
- Fig. 1: Darstellung der Kräftegleichgewichte bei Freilauf und Schubbetrieb als Funktion konstanter Geschwindigkeit,
- Fig. 2: eine schematische Darstellung eines ersten Höhenprofils und das Verhalten der Geschwindigkeitsregelung,
- Fig. 3: eine schematische Darstellung eines zweiten Höhenprofils und das Verhalten der Geschwindigkeitsregelung,
- Fig. 4: der Verlauf des spezifischen Verbrauchs bei geschlossenem Antriebsstrang, und
- Fig. 5: die Geschwindigkeitsregeleinrichtung in schematischer Darstellung.

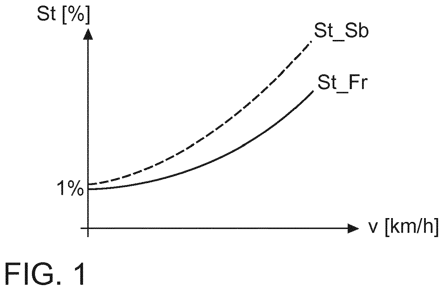

Fig. 1 zeigt die die Darstellung der Kräftegleichgewichte bei Freilauf und Schubbetrieb eines Kraftfahrzeugs als Funktion der Fahrzeuggeschwindigkeit v und der Steigung St einer Gefällstrecke. Es existieren zu jeder Geschwindigkeit zwei Steigungen, in denen sich das Fahrzeug in einem Kräftegleichgewicht befindet, nämlich eine Steigung St_Fr, bei der die Hangabtriebskraft den äußeren Fahrwiderständen entspricht, und eine Steigung St_Sb, bei der die Hangabtriebskraft der Summe aus äußeren und inneren Fahrwiderständen entspricht. Wegen der höheren Widerstände im Schubbetrieb wird St_Sb betragsmäßig stets über St_Fr liegen, damit das Fahrzeug bei gegebener Geschwindigkeit im Kräftegleichgewicht ist, wie dies in Fig. 1 dargestellt ist. Dabei wird zumindest ein Gefälle von ca. 1% benötigt, damit sich ein stehendes Fahrzeug in Bewegung setzt.

Bewegt sich nun ein Fahrzeug mit der gewünschten Geschwindigkeit und wird ein Gefälle der Steigung St_Sb befahren, so wird das Fahrzeug mit Nullverbrauch fahren, da die Hangabtriebskraft der Summe aus äußeren und inneren Fahrwiderständen entspricht.

Befährt das Fahrzeug dagegen ein Gefälle der Steigung St_Fr, so reicht das Gefälle nicht aus das Fahrzeug bei geschlossenem Antriebsstrang, d.h. mit geschlossener Kupplung, ohne Kraftstoffverbrauch auf der im Vorangegangenen genannten gewünschten Geschwindigkeit zu halten. Es muss stattdessen etwas Leistung vom Motor abgegeben werden und der Verbrennungsmotor befindet sich dabei in einem außerordentlich ineffizienten Betriebspunkt.

Wird nun der Antriebsstrang mittels der Kupplung geöffnet, so rollt das Fahrzeug mit geöffnetem Antriebsstrang mit der Gleichgewichtsgeschwindigkeit das Gefälle herab. In diesem Falle liegt der Verbrauch unter dem Verbrauch bei geschlossenem Antriebsstrang.

Es ist daher aus energetischer Sicht sinnvoll, bei einem entsprechenden Gefälle die Kupplung zu öffnen, um mit geöffnetem Antriebsstrang das Gefälle herabzurollen.

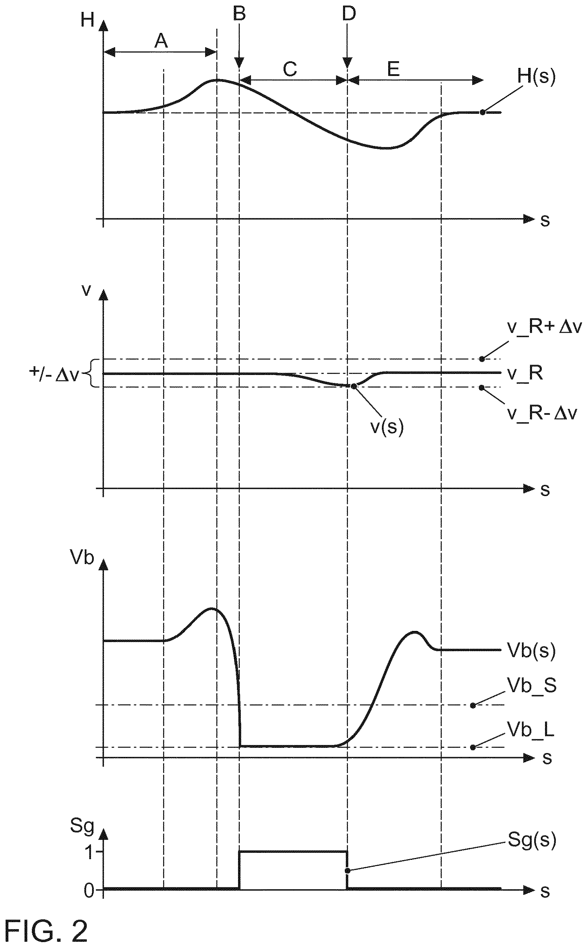

Fig. 2 zeigt das Verhalten der Geschwindigkeitsregelung basierend auf einem ersten Höhenprofil H(s), wobei dieses Verhalten anhand von vier untereinander dargestellten Graphen unterschiedlicher, miteinander verknüpfter Parameter veranschaulicht wird. Dabei ist das Beispiel der Fig. 2 auf ein Fahrzeug mit automatischem Getriebe oder einer automatischen Kupplung ausgelegt.

Dabei zeigt der obere Graph der Fig. 2 das Höhenprofil H(s) der Fahrbahn, beispielsweise in Meter über Normalnull, als Funktion der zurückgelegten Fahrstrecke s. Zu erkennen ist, dass das Fahrzeug nach einer Fahrt in der Ebene zuerst einen Anstieg bewältigen muss, dem ein langes Gefälle mit nachfolgendem Anstieg zurück auf das Niveau der Ebene folgt.

Darunter dargestellt im zweiten Graph ist das Geschwindigkeitsprofil v(s) des Fahrzeugs als Funktion der zurückgelegten Fahrstrecke s, wobei sich die Geschwindigkeit v(s) des Fahrzeugs innerhalb eines Geschwindigkeitsbandes +/-Δv der eingestellten Regelgeschwindigkeit v_R bewegt, d.h. zwischen einer oberen Grenze v_R+Δv und einer unteren Grenze v_R-Δv. Dabei muss das Geschwindigkeitsband nicht symmetrisch ausgelegt sein.

Im von oben gesehen dritten Graphen ist der dazugehörige Kraftstoffverbrauch Vb(s) als Funktion der zurückgelegten Strecke s aufgetragen, wobei ferner noch der spezifische Verbrauch Vb_Sp und der Leerlaufverbrauch Vb_L als feste Größen dargestellt sind.

In dem unteren Graphen der Fig. 2 ist schließlich das sich aus dem Höhenprofil H(s), dem Geschwindigkeitsverlauf v(s) und dem sich daraus ergebenden aktuellen Verbrauch Vb(s) resultierende binäre Signal Sg(s) dargestellt.

In einem ersten Abschnitt A bewegt sich das Fahrzeug zu Beginn auf einer konstanten Höhe H, also in einer Ebene, wobei etwa in der Mitte des ersten Abschnitts A ein Anstieg bis zu einem Gipfelpunkt am Ende des Abschnitts A zu bewältigen ist. Im entsprechenden Geschwindigkeitsdiagramm ist zu erkennen, dass die Geschwindigkeitsregelung das Fahrzeug über den gesamten Bereich des Abschnitts A auf der eingestellten oder gewünschten Regelgeschwindigkeit v_R hält. Im Verbrauchsdiagramm ist zu erkennen, dass der Kraftstoffverbrauch Vb für die Fahrt in der Ebene im ersten Teil des Abschnitts A konstant ist. Mit Beginn des Anstiegs muss der Antriebsstrang des Fahrzeugs mehr Leistung zur Verfügung stellen, um die Regelgeschwindigkeit v_R konstant zu halten, was zu einem Anstieg des Verbrauchs Vb führt. Während dieses Abschnitts A ändert sich am binären Steuersignal nichts, mit anderen Worten, das binäre Signal ist nicht gesetzt und hat den Wert Null.

Mit dem Erreichen des Gipfelpunkts des Anstiegs am Ende des ersten Abschnitts A folgt ein Gefälle, was zu einem Rückgang des Verbrauchs Vb bei Beibehaltung der Fahrzeuggeschwindigkeit v(s) auf der Regelgeschwindigkeit v_R. Im Punkt B des Gefälles hat das Gefälle einen Wert erreicht, der dem spezifischen Verbrauch Vb_S entspricht. Mit dem Erreichen des spezifischen Verbrauchs Vb_S ist das Gefälle ausreichend, um den Antriebsstrang zu öffnen und das binäre Signal wird auf den logischen Wert Eins gesetzt. Mit dem Öffnen des Antriebsstrangs aufgrund des binären Signals Sg(s) = 1 sinkt der Verbrauch auf den Leerlaufverbrauch Vb_L des Fahrzeugs.

Der Freilaufbetrieb des Fahrzeugs wird über einen Abschnitt C aufrechterhalten, wobei aus dem Geschwindigkeitsdiagramm zu erkennen ist, dass die Fahrzeuggeschwindigkeit v(s) langsam abnimmt. Mit anderen Worten, das Gefälle ist nicht ausreichend, um das Fahrzeug auf der gewünschten Regelgeschwindigkeit v_R zu halten.

Mit dem Erreichen der unteren Grenze des zulässigen Geschwindigkeitsbandes v_R-Δv, also im Punkt D, muss das Fahrzeug wieder auf die Regelgeschwindigkeit v_R zurückgeführt werden. Das Erreichen der unteren Grenzgeschwindigkeit v_R-Δv schaltet also das binäre Signal Sg(s) wieder zurück auf den Wert Null und der Antriebsstrang wird wieder geschlossen. Dies führt zu einer Beschleunigung des Fahrzeugs zurück auf die Regelgeschwindigkeit v_R mit einer Zunahme des Kraftstoffverbrauchs Vb(s).

Im nachfolgenden Bereich E nimmt das Gefälle wieder ab und es erfolgt ein erneuter Anstieg im Höhenprofil H(s) auf den Höhenwert zu Beginn des Abschnitts A, d.h. auf eine ebene Fahrt. Bis zum Ende des Anstiegs nimmt der Kraftstoffverbrauch Vb(s) zu und geht mit dem Erreichen der ebenen Fahrt auf einen konstanten Wert zurück.

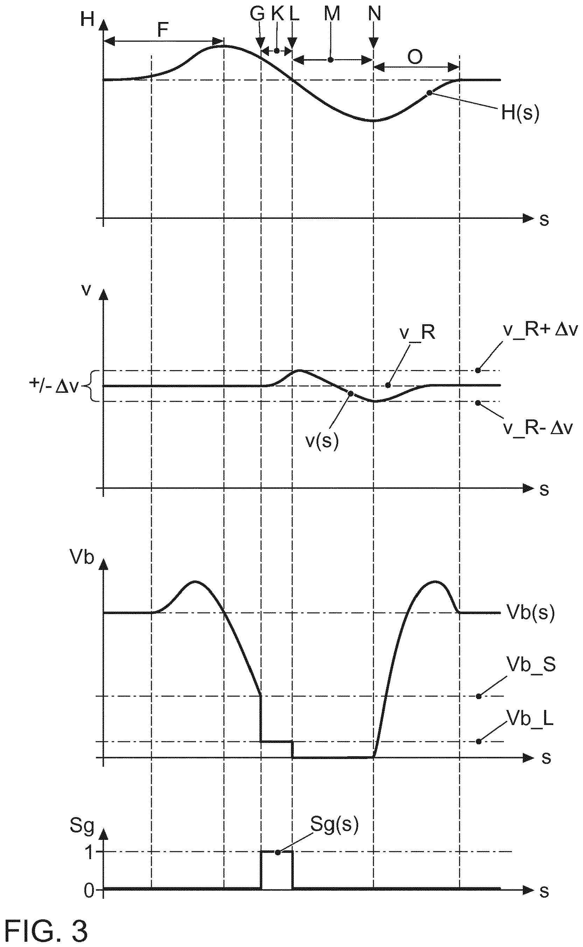

Fig. 3 zeigt ein etwas komplexeres Höhenprofil H(s) im Vergleich zu Fig. 2, wobei die vier untereinander angeordneten Graphen in wesentlichen Teilen denen der Fig. 2 entsprechen, so dass zur detaillierten Erläuterung der verwendeten Größen und Bezeichnungen auf Fig. 2 verwiesen wird.

Im ersten Abschnitt F führt das Fahrzeug eine normale, geschwindigkeitsgeregelte Fahrt durch, wobei ein Anstieg zu bewältigen ist, was sich in dem erhöhten Verbrauch Vb(s) niederschlägt.

Im Punkt G fällt der Momentanverbrauch Vb(s) unter den zur aktuellen Geschwindigkeit gehörenden spezifischen Verbrauchswert Vb_S. Als Folge wird der Antriebsstrang geöffnet. Im zweiten Abschnitt K rollt das Fahrzeug bei offenem Antriebsstrang und der Verbrauch Vb(s) entspricht dem Leerlaufverbrauch Vb_L. Allerdings steigt die Geschwindigkeit v(s) des Fahrzeugs aufgrund des Gefälles bis auf den oberen Grenzwert des Geschwindigkeitsbandes v_R+Δv an.

Im Schaltpunkt L wird daher der Antriebsstrang mit dem Erreichen des oberen Grenzwertes v_R+Δv wieder geschlossen.

Im dritten Abschnitt M rollt das Fahrzeug mit geschlossenem Antriebsstrang aus und der Verbrauch ist infolgedessen Null. Gegebenenfalls muss zusätzlich gebremst werden, um das Fahrzeug innerhalb des zulässigen Geschwindigkeitsbandes zu halten. Im Beispiel fällt die aktuelle Geschwindigkeit v(s) wegen des abflachenden Gefälles bis auf die untere Grenze des Geschwindigkeitsbandes v_R-Δv ab.

Im Schaltpunkt N wird mit dem Erreichen der unteren Grenze v_R-Δv das Schaltsignal Sg(s) zum Schließen des Antriebsstrangs auf Null gesetzt. Am Zustand des Antriebsstrangs ändert sich nichts, da dieser bereits geschlossen ist.

Im vierten Abschnitt O führt das Fahrzeug wieder eine normale, geschwindigkeitsgeregelte Fahrt aus.

Anzumerken ist noch, dass das Geschwindigkeitsband +/-Δv nicht notwendigerweise symmetrisch um die Regelgeschwindigkeit v_R angeordnet sein muss. So kann in die obere Richtung eine Abweichung von Δv1 und in die untere Richtung eine Abweichung von Δv2 mit Δv1 ≠ Δv2 vorgegeben sein.

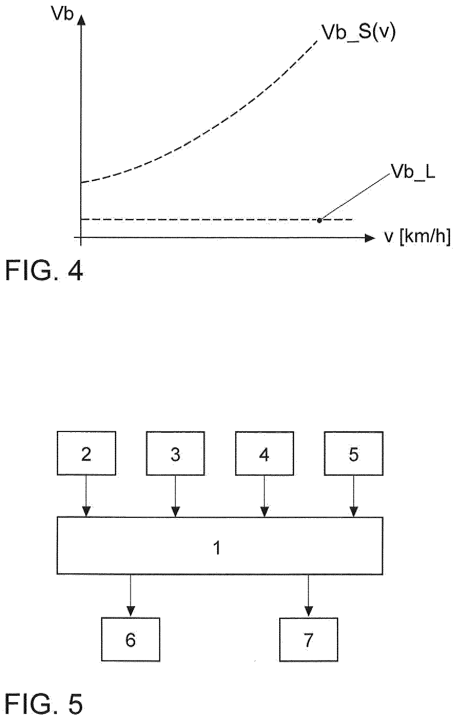

Fig. 4 zeigt die spezifische Verbrauchkennlinie Vb_S(v) als Funktion der Geschwindigkeit v, wobei ferner der von der aktuellen Geschwindigkeit des Fahrzeugs unabhängige Leerlaufverbrauch Vb_L dargestellt ist. Der spezifische Verbrauch Vb_S, der für jede Fahrzeuggeschwindigkeit v die Steigung desjenigen Gefälles parametrisiert, die ein Kräftegleichgewicht bei offenem Antriebsstrang wiedergibt, steigt als Funktion der Geschwindigkeit v an und die Kennlinie Vb_S(v) kann einerseits per Simulation erstellt und/oder andererseits per Experiment ermittelt werden. Zur experimentellen Ermittlung der Kennlinie muss zu jeder Geschwindigkeit eine Messung bei Gefälle durchgeführt werden. Wird beispielsweise bei einer Geschwindigkeit von 80 km/h ermittelt, dass ein Fahrzeug bei einem Gefälle von 4% bei geöffnetem Antriebsstrang konstant weiterfahren würde, so würde der Kraftstoffverbrauch bei diesem Gefälle ermittelt werden, der notwendig wäre, damit das Fahrzeug eine konstante Geschwindigkeit von 80 km/h halten würde. In der Kennlinie der Fig. 4 wird dann dieser Verbrauch für die Regelgeschwindigkeit von 80 km/h als spezifischer Verbrauch Vb_S(v) eingetragen. Wird nun bei einer Geschwindigkeit von 80 km/h dieser spezifische Verbrauch erreicht oder unterschritten, so kann der Antriebsstrang zur Verringerung des Verbrauchs geöffnet werden.

Fig. 5 zeigt die Vorrichtung zum energieeffizienten Betrieb eines Kraftfahrzeugs in schematischer Darstellung. Dabei umfasst die Vorrichtung eine Steuereinrichtung 1, die eine entsprechende Aktorik 6 zur Geschwindigkeitsregelung des Fahrzeugs ansteuert. Die Steuereinrichtung 1 erhält als Eingangssignale über eine entsprechende Einrichtung 2 die Regelgeschwindigkeit v_R sowie die zulässige Geschwindigkeitsabweichung Δv zur Ermittlung des zulässigen Geschwindigkeitsbandes v_R+/-Δv. Ferner wird die aktuelle Fahrzeuggeschwindigkeit v(s) sowie der aktuelle Verbrauch Vb(s) der Steuereinrichtung 1 zugeführt, die über entsprechende Einrichtungen 3, 4 ermittelt werden. Schließlich ist eine Speichereinrichtung 5, die die Kennlinie Vb_S(v) des spezifischen Verbrauchs Vb_S enthält, zur Zuführung der Kennlinie Vb_S(v) mit der Steuereinrichtung 1 verbunden. Aus den zugeführten Daten ermittelt die Steuereinrichtung 1 ein binäres Steuersignal Sg, welches zur Ansteuerung 7 des Antriebsstrangs verwendet wird's. Dabei kann die Ansteuerung in einem Öffnen oder Schließen des Antriebsstrangs oder in einer Nachricht an den Fahrer des Fahrzeugs bestehen.

In einem anderen nicht näher beschriebenen Ausführungsbeispiel kann eines der erfindungsgemäßen Verfahren auch während einer von einer Geschwindigkeitsregelanlage ungeregelten Fahrt verwendet werden. Die Benutzung übertrifft in diesem Fall die Möglichkeiten der bekannten "Segelsysteme", bei denen der Antriebsstrang geöffnet wird, sobald der Fahrer das Fahrpedal ganz löst. Unter Verwendung eines der erfindungsgemäßen Verfahren bzw. Vorrichtung, kann eine noch größere Kraftstoffersparnis erzielt werden, weil der Antriebsstrang schon vor dem Lösen des Fahrpedals geöffnet wird bzw. durch den Fahrer geöffnet werden kann.

Während der Fahrt wird die aktuelle Geschwindigkeit v und der Kraftstoffverbrauch Vb des Fahrzeugs bei der aktuellen Geschwindigkeit v ermittelt und der Kraftstoffverbrauch Vb wird mit einem für diese Geschwindigkeit v spezifischen Verbrauchswert Vb_S vergleicht. Wenn der Kraftstoffverbrauch Vb kleiner oder gleich dem spezifischen Verbrauchswert Vb_S ist, wird ein binäres Signal Sg erzeugt. Falls es sich um ein Kraftfahrzeug mit einem automatischen Getriebe oder einer automatisch bzw. automatisiert betätigbaren Kupplung handelt, wird der Antriebsstrang des Kraftfahrzeugs nach Setzen des binares Signales Sg geöffnet, indem die Kupplung geöffnet werden oder in dem Getriebe ein Neutral eingelegt wird. Bei Fahrzeugen mit einer lediglich von dem Fahrer betätigbaren Kupplung bzw. Getriebe bewirkt das Setzen des binären Signals Sg eine Benachrichtigung des Fahrers zum Auskoppeln des Antriebsstrangs.

Weiterhin wird die Lage des Fahrpedals und des Bremspedals ermittelt, und wenn der Fahrer ein Fahr- oder Bremspedal betätigt, kann der Antriebsstrang wieder geschlossen werden bzw. kann der Fahrer durch Anzeige des einzulegenden Gangs wieder zum Schließen des Antriebsstrangs aufgefordert werden. Da manche Fahrer nach dem Öffnen des Antriebsstrangs den Fuß nicht ganz vom Fahrpedal nehmen, sondern es nur teilweise lösen oder sogar in der ursprünglichen Lage halten, kann das System so eingestellt sein, dass das Schließen des Antriebsstranges bzw. das Auslösen des Signals dazu erst nach einem Niedertreten des Fahrpedals um einen gewissen Winkel oder mit einer gewissen Geschwindigkeit bzw. einem gewissen Geschwindigkeitsgradienten erfolgt.

Es gibt viele Möglichkeiten, wie das System ausgeführt wird z. B. kann das Setzen des binaren Signals Sg auch nur auf den Zustand eingeschränkt werden, wenn der Kraftstoffverbrauch Vb zwar kleiner als der spezifische Verbrauchswert Vb_S ist, aber nicht gleich null, oder das Setzen des Signals kann dazu noch zusätzlich von der Lage oder Betätigungsgeschwindigkeit des Fahrpedals abhängig sein. Dadurch kann in dem Verfahren auch der Nullverbrauch bei Unterbrechung der Kraftstoffzufuhr beim Bremsen durch den Motor berücksichtigt werden.

### Bezugszeichenliste

- H: Höhe über NN
- H(s): Höhenprofil
- s: zurückgelegte Fahrstrecke
- Sg: binäres Signal
- St_Sb: Steigung Schubbetrieb
- St_Fr: Steigung Freilauf
- v: Geschwindigkeit
- v_R: Regelgeschwindigkeit
- Δv: Schwankungsbreite Geschwindigkeitsband
- Vb: Verbrauch
- Vb_S: spezifischer Verbrauch
- Vb_L: Verbrauch Leerlauf

- A: erster Abschnitt
- B: Schaltpunkt spezifischer Verbrauch
- C: zweiter Abschnitt Freilauf
- D: Schaltpunkt untere Grenze Geschwindigkeitsband
- E: dritter Abschnitt geschwindigkeitsgeregelte Fahrt

- F: erster Abschnitt
- G: Schaltpunkt spezifischer Verbrauch
- K: zweiter Abschnitt Freilauf
- L: Schaltpunkt obere Grenze Geschwindigkeitsband
- M: dritter Abschnitt Ausrollen mit geschlossenem Antriebsstrang
- N: Schaltpunkt untere Grenze Geschwindigkeitsband
- O: vierter Abschnitt geschwindigkeitsgeregelte Fahrt

- 1: Steuereinrichtung
- 2: Daten Regelgeschwindigkeit und Geschwindigkeitsband
- 3: Daten aktuelle Fahrzeuggeschwindigkeit
- 4: Daten aktueller Verbrauch
- 5: Kennlinie spezifischer Verbrauch
- 6: Ansteuerung Geschwindigkeitsregelung
- 7: Ansteuerung Antriebsstrang/Schaltempfehlung

## Patentansprüche

1. Verfahren zum energieeffizienten Betrieb eines Kraftfahrzeugs, wobei ein binäres Signal (Sg) erzeugt wird, wenn der Kraftstoffverbrauch (Vb) des Fahrzeugs bei der aktuellen Geschwindigkeit (v) kleiner oder gleich einem für diese Geschwindigkeit (v) spezifischen Verbrauchswert (Vb_S) ist,
das binäre Signal (Sg) anzeigt, ob durch eine Öffnung des Antriebsstrangs ein energiesparendes Fahren möglich ist, und
der spezifische geschwindigkeitsabhängige Verbrauchswert (Vb_S) bei einer vorgegebenen Geschwindigkeit (v) derjenige ist, den das Kraftfahrzeug bei geschlossenem Antriebsstrang zur Beibehaltung der Geschwindigkeit (v) in einem Gefälle benötigt, in welchem das Kraftfahrzeug bei geöffnetem Antriebsstrang die Geschwindigkeit (v) konstant beibehalten würde.

2. Verfahren nach Anspruch 1, **dadurch gekennzeichnet, dass** der Antriebsstrang des Kraftfahrzeugs geöffnet wird, wenn das binäre Signal (Sg) gesetzt ist.

3. Verfahren nach Anspruch 1, **dadurch gekennzeichnet, dass** das Setzen des binären Signals (Sg) eine Benachrichtigung des Fahrers zum Auskoppeln des Antriebsstrangs bewirkt.

4. Verfahren nach Anspruch 1, **dadurch gekennzeichnet, dass** die Geschwindigkeit (v) des Kraftfahrzeugs auf eine Regelgeschwindigkeit (v_R) innerhalb eines vorgegebenen Geschwindigkeitsbands (+/-Δv) geregelt wird.

5. Verfahren nach Anspruch 4, **dadurch gekennzeichnet, dass** der Antriebsstrang des Kraftfahrzeugs geöffnet wird, wenn das binäre Signal (Sg) gesetzt ist und mit dem Erreichen einer der beiden Grenzen des Geschwindigkeitsbandes der Antriebsstrang wieder geschlossen wird.

6. Verfahren nach Anspruch 4, **dadurch gekennzeichnet, dass** das Setzen des binären Signals (Sg) eine Benachrichtigung des Fahrers zum Auskoppeln des Antriebsstrangs bewirkt und das Erreichen einer der beiden Grenzen des Geschwindigkeitsbandes eine weitere Nachricht zum Einkoppeln des Antriebsstrangs an den Fahrer auslöst.

7. Verfahren nach einem der vorangegangenen Ansprüche, **dadurch gekennzeichnet, dass** die spezifischen Verbrauchswerte (Vb_S) für vorgegebene Geschwindigkeiten (v) in einer Kennlinie abgelegt sind.

8. Verfahren nach einem der vorangegangenen Ansprüche, **dadurch gekennzeichnet,**
**dass** die spezifischen Verbrauchswerte (Vb_S) per Simulation und/oder per Experiment vorab ermittelt werden.

9. Vorrichtung zum energieeffizienten Betrieb eines Kraftfahrzeugs, welche zur Durchführung des Verfahrens nach einem der vorangegangenen Ansprüche eingerichtet und ausgelegt ist, mit einer Steuereinrichtung (1), einer Einrichtung (3) zur Bestimmung der aktuellen Geschwindigkeit, und einer Einrichtung (4) zur Bestimmung des Kraftstoffverbrauchs (Vb), wobei
die Steuereinrichtung (1) den aktuellen Kraftstoffverbrauch (Vb) bei einer aktuellen Fahrzeuggeschwindigkeit (v) mit einem für diese Geschwindigkeit (v) spezifischen Kraftstoffverbrauch (Vb_S) vergleicht, und ein binäres Regelsignal (Sg) erzeugt, wenn der aktuelle Kraftstoffverbrauch (Vb) kleiner oder gleich dem spezifischen Kraftstoffverbrauch (Vb_S) ist,
das binäre Signal (Sg) anzeigt, ob durch eine Öffnung des Antriebsstrangs ein energiesparendes Fahren möglich ist, und
der spezifische geschwindigkeitsabhängige Verbrauchswert (Vb_S) bei einer vorgegebenen Geschwindigkeit (v) derjenige ist, den das Kraftfahrzeug bei geschlossenem Antriebsstrang zur Beibehaltung der Geschwindigkeit (v) in einem Gefälle benötigt, in welchem das Kraftfahrzeug bei geöffnetem Antriebsstrang die Geschwindigkeit (v) konstant beibehalten würde.

10. Vorrichtung nach Anspruch 9, **dadurch gekennzeichnet, dass** die Vorrichtung eine Ansteuereinheit (7) aufweist, die ein Öffnen des Antriebsstrangs oder eine Nachricht an den Fahrer zum Öffnen des Antriebsstrangs aufgrund des binären Signals bewirkt.

11. Vorrichtung nach Anspruch 9 oder 10, **dadurch gekennzeichnet, dass** die Steuereinrichtung (1) das Kraftfahrzeug auf eine Regelgeschwindigkeit (2) innerhalb eines vorgegebenen Geschwindigkeitsbandes regelt und den aktuellen Kraftstoffverbrauch (Vb) bei einer innerhalb des Geschwindigkeitsbandes liegenden aktuellen Fahrzeuggeschwindigkeit (v) mit dem für diese Geschwindigkeit (v) spezifischen Kraftstoffverbrauch (Vb_S) vergleicht.

12. Vorrichtung nach Anspruch 11, **dadurch gekennzeichnet, dass** die Steuereinrichtung (1) das binäre Regelsignal (Sg) zurücksetzt, wenn bei gesetztem Regelsignal (Sg) die aktuelle Geschwindigkeit eine der beiden Grenzen des Geschwindigkeitsbandes erreicht.

13. Vorrichtung nach Anspruch 11, **dadurch gekennzeichnet, dass** die Ansteuereinheit ein Schließen des Antriebsstrangs oder eine Nachricht an den Fahrer zum Schließen des Antriebsstrangs aufgrund des Rücksetzens des binären Signals (Sg) bewirkt

## Claims

1. A method for the energy-efficient operation of a motor vehicle, wherein a binary signal (Sg) is generated, if the fuel consumption (Vb) of the vehicle at the current velocity (v) is less than or equal to a specific consumption value (Vb_S) for said velocity (v),
the binary signal (Sg) displays, whether an energy-saving driving is possible by an opening of the drive train, and
the specific velocity-dependent consumption value (Vb_S) at a predetermined velocity (v) is the one which the motor vehicle requires when the drive train is closed in order to maintain the velocity (v) on a gradient, in which the motor vehicle when the drive train is opened would maintain the velocity (v) constant.

2. A method according to Claim 1, **characterized in that** the drive train of the motor vehicle is opened, if the binary signal (sg) is set.

3. A method according to Claim 1, **characterized in that** the setting of the binary signal (Sg) results in a notification of the driver to decouple the drive train.

4. A method according to Claim 1, **characterized in that** the velocity (v) of the motor vehicle is regulated to a control velocity (v_R) within a predetermined velocity band (+/-Δv).

5. A method according to Claim 4, **characterized in that** the drive train of the motor vehicle is opened, if the binary signal (Sg) is set and is closed again upon reaching one of the two limits of the velocity band of the drive train.

6. A method according to Claim 4, **characterized in that** the setting of the binary signal (Sg) results in a notification of the driver to decouple the drive train and the reaching of one of the two limits of the velocity band triggers a further message to the driver to couple the drive train.

7. A method according to any one of the preceding claims, **characterized in that** the specific consumption values (Vb_S) for predetermined velocities (v) are stored in a characteristic curve.

8. A method according to any one of the preceding claims, **characterized in that** the specific consumption values (Vb_S) per simulation and/or per experiment are determined in advance.

9. A device for the energy-efficient operation of a motor vehicle, which is configured and designed for the implementation of the method according to any one of the preceding claims, having a control device (1), a device (3) for determining the current velocity, and a device (4) for determining the fuel consumption (Vb), wherein
the control device (1) compares the current fuel consumption (Vb) for a current vehicle velocity (v) with a specific fuel consumption (Vb_S) for said velocity (v), and generates a binary control signal (Sg), if the current fuel consumption (Vb) is less than or equal to the specific fuel consumption (Vb_S),
the binary signal (Sg) displays whether an energy-saving driving is possible by an opening of the drive train, and
the specific velocity-dependent consumption value (Vb_S) at a predetermined velocity (v) is the one which the motor vehicle requires when the drive train is closed in order to maintain the velocity (v) on a gradient, in which the motor vehicle when the drive train is opened would maintain the velocity (v) constant.

10. A device according to Claim 9, **characterized in that** the device has a control unit (7), which causes an opening of the drive train or a message to the driver to open the drive train based on the binary signal.

11. A device according to Claim 9 or 10, **characterized in that** the control device (1) regulates the motor vehicle to a control velocity (2) within a predetermined velocity band and compares the current fuel consumption (Vb) for a current vehicle velocity (v) lying within the velocity band with the specific fuel consumption (Vb_S) for said velocity (v).

12. A device according to Claim 11, **characterized in that** the control device (1) resets the binary control signal (Sg), if the current velocity reaches one of the two limits of the velocity band when the control signal (Sg) is set.

13. A device according to Claim 11, **characterized in that** the control unit causes the closing of the drive train or a message to the driver to close the drive train due to the resetting of the binary signal (Sg).

## Revendications

1. Procédé de fonctionnement énergétiquement efficace d'un véhicule automobile,
un signal binaire (Sg) étant produit quand la consommation en carburant (Vb) du véhicule est, à la vitesse (v) actuelle, inférieure ou égale à une valeur de consommation (Vb_S) spécifique pour cette vitesse (v),
le signal binaire (Sg) indiquant si, par une ouverture du groupe motopropulseur, une conduite économe en énergie est possible, et
la valeur de consommation (Vb_S) spécifique en fonction de la vitesse étant, à une vitesse (v) prescrite, celle dont le véhicule automobile a besoin avec le groupe motopropulseur fermé pour maintenir la vitesse (v) dans une pente dans laquelle le véhicule automobile maintiendrait constante la vitesse (v) avec le groupe motopropulseur ouvert.

2. Procédé selon la revendication 1, **caractérisé en ce que** le groupe motopropulseur du véhicule automobile est ouvert quand le signal binaire (Sg) est fixé.

3. Procédé selon la revendication 1, **caractérisé en ce que** la fixation du signal binaire (Sg) provoque une information du conducteur concernant le découplage du groupe motopropulseur.

4. Procédé selon la revendication 1, **caractérisé en ce que** la vitesse (v) du véhicule automobile est régulée à une vitesse de régulation (v_R) à l'intérieur d'une plage de vitesses (+/-Δv) prescrite.

5. Procédé selon la revendication 4, **caractérisé en ce que** le groupe motopropulseur du véhicule automobile est ouvert quand le signal binaire (Sg) est fixé et le groupe motopropulseur est refermé lorsque l'une des deux limites de la plage de vitesse est atteinte.

6. Procédé selon la revendication 4, **caractérisé en ce que** la fixation du signal binaire (Sg) provoque une information du conducteur concernant le découplage du groupe motopropulseur, et le fait que l'une des deux limites de la plage de vitesse est atteinte déclenche un autre message adressé au conducteur concernant le couplage du groupe motopropulseur.

7. Procédé selon l'une des revendications précédentes, **caractérisé en ce que** les valeurs de consommation (Vb_S) spécifiques pour des vitesses (v) prescrites sont consignées sur une courbe caractéristique.

8. Procédé selon l'une des revendications précédentes, **caractérisé en ce que** les valeurs de consommation (Vb_S) spécifiques sont déterminées au préalable par simulation et/ou par expérience.

9. Dispositif de fonctionnement énergétiquement efficace d'un véhicule automobile, qui est agencé et conçu pour la réalisation du procédé selon l'une des revendications précédentes, avec un dispositif de commande (1), un équipement (3) destiné à la détermination de la vitesse actuelle, et un équipement (4) destiné à la détermination de la consommation en carburant (Vb),
le dispositif de commande (1) comparant la consommation en carburant (Vb) actuelle pour une vitesse de véhicule (v) actuelle avec une valeur de consommation (Vb_S) spécifique pour cette vitesse (v), et produisant un signal de régulation binaire (Sg) quand la consommation en carburant (Vb) actuelle est inférieure ou égale à la valeur de consommation (Vb_S) spécifique,
le signal binaire (Sg) indiquant si une conduite économe en énergie est possible par une ouverture du groupe motopropulseur, et
la valeur de consommation (Vb_S) spécifique en fonction de la vitesse pour une vitesse (v) prescrite étant celle dont le véhicule automobile a besoin avec le groupe motopropulseur fermé pour maintenir la vitesse (v) dans une pente dans laquelle le véhicule automobile maintiendrait constante la vitesse (v) avec le groupe motopropulseur ouvert.

10. Dispositif selon la revendication 9, **caractérisé en ce que** le dispositif comporte une unité de pilotage (7) qui provoque une ouverture du groupe motopropulseur ou un message adressé au conducteur concernant l'ouverture du groupe motopropulseur en raison du signal binaire.

11. Dispositif selon la revendication 9 ou 10, **caractérisé en ce que** le dispositif de commande (1) régule le véhicule automobile à une vitesse de régulation (2) à l'intérieur d'une plage de vitesses prescrite et compare la consommation en carburant (Vb) actuelle pour une vitesse de véhicule (v) actuelle située à l'intérieur de la plage de vitesses avec la valeur de consommation (Vb_S) spécifique pour cette vitesse (v).

12. Dispositif selon la revendication 11, **caractérisé en ce que** le dispositif de commande (1) remet à zéro le signal de régulation binaire (Sg) quand, alors que le signal de régulation binaire (Sg) est fixé, la vitesse actuelle atteint une des deux limites de la plage de vitesses.

13. Dispositif selon la revendication 11, **caractérisé en ce que** l'unité de pilotage provoque une fermeture du groupe motopropulseur ou un message adressé au conducteur concernant la fermeture du groupe motopropulseur en raison de la remise à zéro du signal binaire (Sg).
